# EUROPÄISCHE PATENTANMELDUNG

(11) **EP 0 880 119 A2**
(43) Veröffentlichungstag der Anmeldung: **25.11.1998**
(21) Anmeldenummer: 98890153.4
(22) Anmeldetag: 22.05.1998
(51) Int. Cl.: G08B 25/08

(54) **Fernüberwachungssystem**

(30) Priorität: 22.05.1997 AT 869/97
(71) Anmelder: Post und Telekom Austria Aktiengesellschaft, 1011 Wien (AT)
(72) Erfinder: Blohberger, Franz, Ing., 4030 Linz (AT); Kalischek, Martin, 4020 Linz (AT)
(74) Vertreter: Hübscher, Heiner, Dipl.-Ing.

(57) **Zusammenfassung**

Bei einem Fernüberwachungssystem mit jeder einzelnen von mehreren Überwachungsstellen zur Erzeugung von dem Momentanzustand entsprechenden oder Zustandsänderungen kennzeichnenden Signalen zugeordneten Signalgebern (5 - 7) und durch Übertragungsleitungen (2, 3, 4, 10, 11) mit diesen Signalgebern (5 - 7) verbindbaren Empfängern (12 - 15), sind die Signalgeber (5 - 7) über direkte Leitungen (2 - 4) an eine zentrale Steuer- und Wähleinheit (1) angeschlossen, die die Signale verwaltet und ihrerseits über ein Fernübertragungsnetz (11), z. B. ein Telefonnetz mit den Empfängern (12 - 15) verbindbar ist. Jeder Empfänger (12 - 15) ist zusätzlich mit einer individuellen Kennzeichnungseinheit ausgestattet, die über eine Erkennungsstufe der Steuer- und Wähleinheit die Anschlußberechtigung jedes Empfängers an das System und seine Zugriffsberechtigung zu vorgebbaren Signalgebern bestimmt.

## Beschreibung

Die Erfindung betrifft ein Fernüberwachungssystem nach dem Oberbegriff des Patentanspruches 1.

Überwachungssysteme dieser Art werden vorwiegend dazu verwendet, um bei Abweichungen eines überwachten Objektes vom Normalzustand Alarme auszulösen. Unter anderem werden solche Überwachungssysteme zur Überwachung und Beeinflussung externer Steuereinrichtungen sowie für die Sicherung von Gebäuden verwendet, wo sie mit hauseigenen Überwachungs- oder Alarmanlagen gekuppelt sein können. Ein klassischer Fall für die Anwendung von solchen Alarmanlagen sind Einbruchssicherungen, die beim Ansprechen nicht nur einen örtlichen Alarm auslösen, sondern auch über die Übertragungsleitung einen entsprechenden Alarm an einer oder mehreren externen Stellen, z.B. bei der Exekutive, Feuerwehr und/oder der sonstigen für die Sicherheit des Gebäudes zuständigen Stelle auslösen. Gleiche Verhältnisse ergeben sich bei selbsttätigen Feuermeldern. Neben diesen klassischen Überwachungsaufgaben treten in der Praxis viele andere Fälle auf, in denen eine Überwachung von Personen oder Objekten zumindest erwünscht ist. Insgesamt gibt es eine Vielzahl von Fällen, in denen spezielle Überwachungen erwünscht wären, wo aber wegen der bisher sehr aufwendigen Installation keine Überwachung vorgenommen wird. Ein entscheidendes Problem der bisherigen Überwachungssysteme besteht darin, daß einfache Alarmmelder meist über direkte Leitungen mit den Empfängern zu verbinden sind, wobei die mögliche Leitungslänge begrenzt ist und nur einfache Meldungen (gut oder schlecht) übertragen werden können. Für jede spezifische Meldung sind besondere Signale und Signalübermittlungen und entsprechende Empfangseinrichtungen an der Empfängerseite notwendig.

Aufgabe der Erfindung ist die Schaffung eines Fernüberwachungssystems der eingangs genannten Art, das es ermöglichen soll, mit relativ einfachen Einrichtungen im Bereich der Signalgeber und -empfänger das Auslangen zu finden und dabei trotzdem mit relativ geringem Aufwand verschiedenartige Fehlermeldungen oder Überwachungsmeldungen zu übertragen, wobei die Möglichkeit bestehen soll, die Art der Meldung und ihren Informationsgehalt teilnehmerspezifisch zu gestalten.

Die gestellte Aufgabe wird prinzipiell durch die Merkmale des Patentanspruches 1 gelöst.

Es ist möglich, relativ kurze direkte Leitungen zwischen den Signalgebern und der zentralen Steuer- und Wähleinheit vorzusehen, dabei aber in dieser zentralen Steuer- und Wähleinheit sowohl die von den einzelnen Signalgebern stammenden Signale als auch Abfragesignale von den Empfängern kundenspezifisch und, falls erwünscht, abhörsicher zu verwalten, wobei für die Kommunikation zwischen Steuer- und Wähleinheit und Empfängern ein Übertragungsnetz eingeschaltet werden kann, das somit an sich eine Übertragung über beliebige Distanzen zuläßt. Durch die gegenseitige Abstimmung der individuellen Kennzeichnungseinheiten der Empfänger auf die Erkennungsstufe der Steuer- und Wähleinheit wird verhindert, daß unberechtigte bzw. unbeteiligte Benützer des jeweiligen Fernübertragungsnetzes Zugriff zu dem System und damit den übertragbaren Informationen erhalten. Prinzipiell sind verschiedene Überwachungsmöglichkeiten vorhanden. Nach einer dieser Möglichkeiten erhält ein Empfänger beim Auftreten eines Alarms durch den zugehörigen Signalgeber ein entsprechendes Alarmsignal, wobei man auch die Möglichkeit vorsehen kann, entsprechende Alarmsignale gleichzeitig weiteren Empfängern zuzuführen oder dann, wenn der momentan angesprochene Empfänger nicht empfangsbereit ist bzw. den Empfang des Alarmes nicht quittiert, die Alarmmeldung zu wiederholen und/oder den Alarm an weitere vorher bestimmte Empfangsstellen weiterzuleiten. Auch der umgekehrte Weg ist in der Form möglich, daß z. B. ein Empfänger durch Anwahl der zentralen Steuer- und Wähleinheit die Signalgeber, zu denen er Zugriffsberechtigung hat, abfrägt und dadurch Informationen über den Zustand des überwachten Objektes od.dgl. erhält.

Neben den beschriebenen passiven Überwachungsaufgaben ist es auch möglich, das Fernüberwachungssystem zusätzlich als Teil eines aktiven Systems für die Durchführung und Fernübertragung von Befehlen einzusetzen, wenn man eine Weiterbildung gemäß Anspruch 2 vorsieht. Ein einfaches Beispiel wäre hier, daß der Besitzer eines mit einem Überwachungssystem ausgestatteten Gebäudes durch entsprechenden Anruf feststellt, ob die Rolläden geschlossen sind, z.B. bei einer Sturmwarnung, einen Befehl zum Schließen der Rolläden übermittelt, oder den momentanen Betriebszustand einer Heizungsanlage feststellt und deren Ein- oder Ausschaltung veranlaßt.

Ein wesentlicher Vorteil der Erfindung besteht darin, daß es durch entsprechende Ausgestaltung der Steuer- und Wähleinheit möglich wird, aus einfachen Signalen von den Signalgebern her anwenderspezifisch genau abgestimmte Meldungen oder Aktionen abzuleiten. Um dies zu erreichen, wird erfindungsgemäß eine Ausführung nach Anspruch 3 vorgesehen. Zusätzlich zu der programmierten Signalverarbeitung kann man aus den Signalen bzw. den verarbeiteten Signalen weitere Informationen für den jeweiligen Empfänger ableiten. Sind die Adressen der Signalgeber in der zentralen Steuer- und Wähleinheit gespeichert, kann man, wenn der Empfänger entsprechende Empfangseinrichtungen, z. B. einen PC, besitzt, zusätzlich zur Übermittlung eines Alarms auch angeben, wann dieser Alarm aufgetreten ist und, falls der Empfänger mit mehreren Signalgebern vernetzbar ist, von welchem Signalgeber (Entstehungsort) der Alarm stammt bzw. um welche Art des Alarms es sich handelt. Wenn etwa ein Übertragungsrahmen von 70 Zeichen vorhanden ist, so lassen sich mit diesen Zeichen sehr genaue Informationen im obigen Sinn übertragen.

Die Gesamtorganisation wird durch eine Weiterbildung nach Anspruch 4 wesentlich vereinfacht. Steckkarten lassen sich bei Erweiterungen oder Änderungen des Systems, also beim Anschluß weiterer Teilnehmer vom Signalgeber an die zentrale Steuer- und Wähleinheit ergänzen und auswechseln, ohne daß dadurch der durch die verbleibenden Steckkarten gewährleistete Gesamtbetrieb beeinflußt oder gestört wird. In Speichern und Steckkarten können auch Informationen untergebracht werden, die vom Rechner der Steuer- und Wähleinheit ablesbar sind und diesem angeben, nach welchem Programm oder welchen Programmen über eine genormte Schnittstelle Signale zu verarbeiten sind.

Sinngemäß die gleichen Vorteile ergeben sich bei einer Ausgestaltung nach Anspruch 5. Hier können baugleiche Kennzeichnungseinheiten für die verschiedenen Teilnehmer verwendet werden, bei denen aber das Ausmaß der jeweiligen Berechtigung durch die Steckkarte genau festgelegt ist. Lediglich für Sonderfälle kann man auch vorsehen, daß von einer beliebigen Teilnehmerstelle des Fernübertragungsnetzes Informationen von ausgewählten Signalgebern abgefragt werden können. Hier kann man eine unberechtigte Abfrage dadurch verhindern, daß der jeweilige Teilnehmer nach Anruf der Zentrale die Anschlußnummer seiner berechtigten Teilnehmerstelle und/oder ein sonstiges Codesignal, z. B. wie den persönlichen Code einer Scheckkarte, eingibt.

Durch eine Ausführung nach Anspruch 6 wird es auch möglich, eine vollständige Dokumentation aller über die Zentrale laufenden Meldungen bzw. Anrufe zu gewährleisten. Aus dieser Dokumentation können wieder kundenspezifisch die den jeweiligen Kunden betreffenden Meldungen ausgegeben werden, so daß der jeweilige Kunde auf eine eigene Dokumentation verzichten oder diese nachträglich überprüfen kann.

Um die Übertragung über das öffentliche Netz zu vereinfachen, wird man eine Ausgestaltung nach Anspruch 7 vorsehen.

Selbstverständlich werden die erforderlichen Maßnahmen gesetzt, um die notwendige Spannungs- bzw. Stromversorgung aller zum System gehörigen Einrichtungen zu gewährleisten, wobei eine Fremdversorgung angestrebt wird, aber vorgesehen werden kann, daß bei Netzfausfall im Versorgungsnetz eine kurzzeitige Versorgung über das Fernübertragungsnetz stattfindet. Überdies ist eine galvanische Trennung zwischen Endgerät und System gewährleistet.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: im schematischen Blockschema ein erfindungsgemäßes Überwachungssystem,
- Fig. 2: beispielsweise zwei in der zentralen Steuer- und Wähleinheit verwendbare Steckkarten in Ansicht und Steckerbelegung
- Fig. 3: ein Flußdiagramm über eine mögliche Signalverarbeitung in der zentralen Steuer- und Wähleinheit.

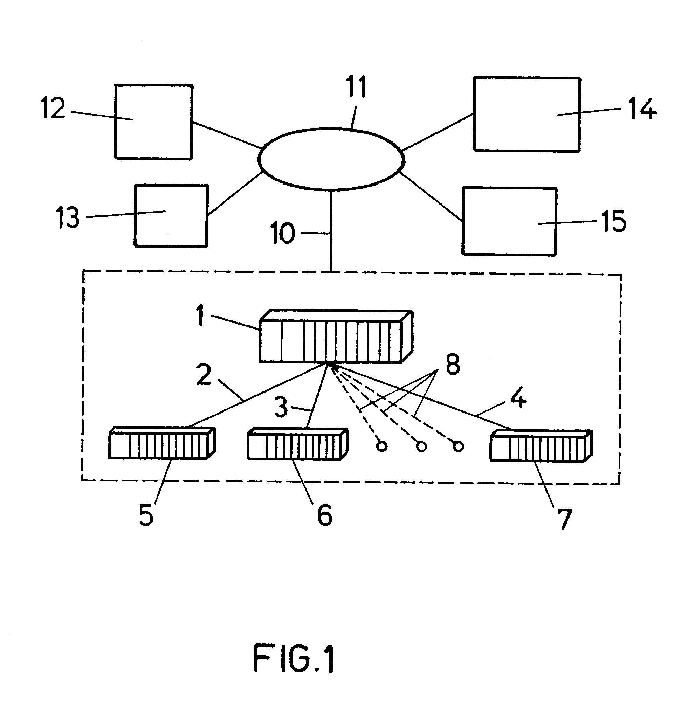

Nach Fig. 1 besitzt das vorgesehene System eine zentrale Steuer- und Wähleinheit 1, die mit einem Modem ausgestattet ist und über direkte Leitungen 2, 3, 4 mit an Überwachungsstellen angeordneten Signalgebern 5, 6, 7 in Verbindung steht. Durch weitere strichlierte Leitungen 8 wurde angedeutet, daß eine Vielzahl, z. B. 84, von Signalgebern mit der zentralen Steuereinheit 1 verbunden werden kann. Durch die Unterteilung in den Signalgeberblöcken 5, 6, 7 wurde ferner angedeutet, daß jeder Signalgeber 5, 6, 7 eine Einheit bilden kann, die von verschiedenen Fühlern Signale empfängt und, je nachdem von welchem Fühler das Signal kommt, verschiedene Signale (z. B. "Alarmsignal vom dritten Fühler des Hausüberwachungssystems") abgeben kann. Zu diesem Zweck ist ein direkter Zugriff auf das Gerät über ein Operator-Interface vorgesehen.

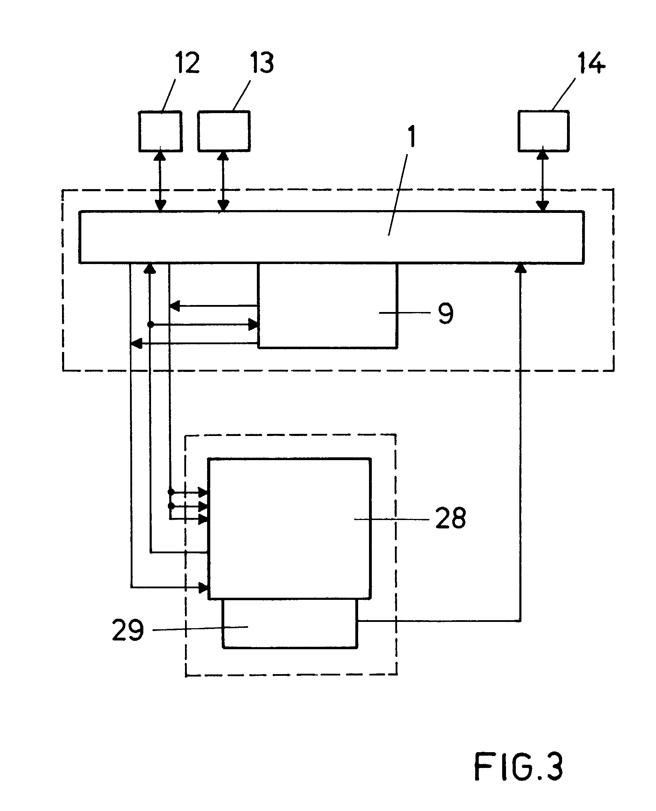

Die zentrale Steuer- und Wähleinheit ist mit einem Rechner 9 und mit Speichern ausgestattet (siehe Fig. 3) und besitzt ein Wählsystem, mit dem sie über eine normale Anschlußleitung 10, Teilnehmer in einem öffentlichen Fernübertragungsnetz 11 anwählen kann. Solche Teilnehmer 12, 13, 14, 15 sind in Form von Blöcken angedeutet. Jeder Teilnehmer 12 - 15, also jeder berechtigte Empfänger, ist mit einer individuellen Kennzeichnungseinheit ausgestattet, die über eine Erkennungsstufe der Steuer- und Wähleinheit 1 die Zugriffsberechtigung zu bzw. die Empfangsberechtigung von bestimmten Signalgebern 5 - 8 vorausbestimmt, wobei die Kennzeichnungseinheit vorzugsweise die Berechtigung bestimmende bzw. begrenzende Daten auf einer Steckkarte enthält. Beim Ausführungsbeispiel wird angenommen, daß die Empfänger 14 und 15 passive Empfänger und die Empfänger 12, 13 interaktive Empfänger sind, was bedeutet, daß bei den Empfängern 14, 15 lediglich von den zugeordneten Fühlern einlangende Alarmmeldungen abgegeben und, falls der jeweilige Empfänger mit entsprechenden Einrichtungen ausgestattet ist, auch dokumentiert werden können. Besitzen die Empfänger einen PC-Anschluß, so kann am jeweiligen PC eine spezifische Meldung über den jeweiligen Alarm angezeigt werden. Gleichzeitig wird vorzugsweise ein Alarmsignal, also ein optisches oder akustisches Signal, ausgelöst. Wird der Empfang nicht quittiert, was z. B. durch Drücken einer Quittierungstaste beim jeweiligen Empfänger oder an der zugehörigen Kennzeichnungseinheit erfolgen kann, wird die zentrale Steuer- und Wähleinheit je nach vorgesehener Programmierung die Alarmmeldung nach einer vorgegebenen Zeit wiederholen und allenfalls, je nach Wichtigkeit des Alarms, gleichzeitig mit der ersten Alarmmeldung weitere Ziele anwählen oder bei Nichtmeldung des ersten Empfängers einen weiteren Empfänger anwählen. Die Empfänger 12, 13 sind, wie erwähnt, interaktive Empfänger, bei denen die Möglichkeit besteht, durch Anwahl der zentralen Steuer- und Wähleinheit 1 und Abgabe eines die Zugriffsberechtigung bestätigenden Signals Zugriff zu den zugeordneten Fühlern, z. B. 5, zu erhalten und dadurch Informationen über den Momentanzustand abzufragen.

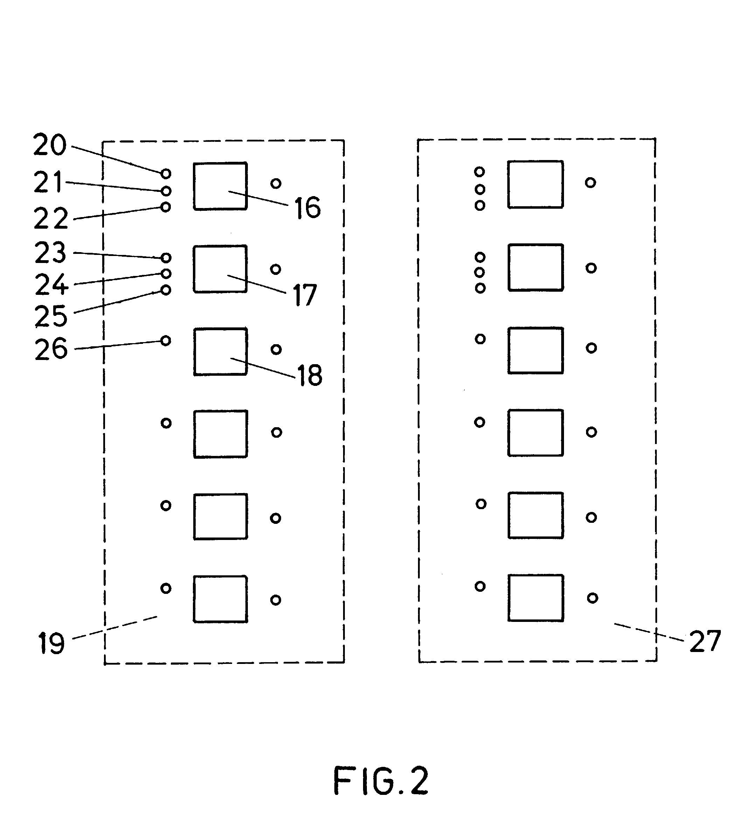

Wie Fig. 2 zeigt, ist jedem berechtigten Empfänger ein Steckplatz 16, 17, 18 usw. auf einer Steckkarte 19 in der zentralen Steuer- und Wähleinheit zugeordnet, wobei auf dieser Karte Eingänge 20 - 26 usw. vorgesehen sind, die die Verbindung mit den Fühlern, z. B. 5 - 7, herstellen. Wie ersichtlich, ist der an den Steckplatz 16 anschließbare Teilnehmer mit drei Alarmeingängen 20 - 22, der Teilnehmer 17 mit Alarmeingängen mit 23 - 25 und der Teilnehmer 18 nur mit einem Alarmeingang 26 verbunden. Durch eine weitere Karte 27 ist angedeutet, daß in der zentralen Steuer- und Wähleinheit 1, Anschlußmöglichkeiten für eine Vielzahl von Signalgebern einerseits und Teilnehmerempfängern anderseits vorhanden sind. Tritt beispielsweise an einem der Eingänge 20 - 22 ein mitzuteilendes Alarmsignal auf, dann wählt die zentrale Steuer- und Wähleinheit den dem Steckplatz 16 zugeordneten Teilnehmer und gibt die entsprechende Alarmmeldung ab. Es wurde dabei schon erwähnt, daß die Steuer- und Wähleinheit 1 eine über äußere Eingänge, z. B. ein Laptop, programmierbare Qualifikationsstufe aufweisen kann, die bestimmt, ob überhaupt ein Alarm abgegeben wird, welche Empfänger bei Alarm angesprochen werden und die auch abhängig von der Qualifikation und der Eingangsstelle des Alarms vorgespeicherte Daten über Zeitpunkt, Auftrittsort und Art des Alarms an den jeweiligen Empfänger weiterleitet und in einem eigenen Speicherregister der zentralen Steuer- und Wähleinheit zur Dokumentation ablegt.

In Fig. 3 ist angedeutet, wie Alarme von den verschiedenen Signalgebern 5 - 7 bzw. den Eingängen 20 - 26 verarbeitet werden können. Der Rechner 9 enthält hier einen Alarmzähler und ist mit einer Zeitsteuerung ausgestattet, über die zyklisch sämtliche Eingänge 20 - 26 usw. nach auftretenden Alarmen abgefragt werden. Es kann festgelegt werden, ob bei einem nur einmal nur während eines Zyklus auftretenden, beim nächsten Zyklus aber nicht mehr vorhandenem Alarm eine Alarmmeldung abgebeben wird oder nicht. Die notwendige Software wird durch Programmierung des Rechners 9 bereitgestellt. Je nach dieser Vorprogrammierung wird eine Entscheidungsstufe 28 beeinflußt, die entscheidet, wie der Alarm zu behandeln ist und den Alarm an die jeweilige Empfangsstation weiterleitet oder nicht. Bei Weiterleitung des Alarms wird ferner die Alarmmeldung durch ein Quittierungssignal unterbrochen. Tritt kein Quittierungssignal auf, kann, wie bereits oben beschrieben wurde, ein weiterer, hier berechtigter Teilnehmer angewählt und dort der Alarm abgegeben werden. Die Alarmmeldungen werden von 28 gleichzeitig in eine Datei ausgelagert, wobei kundenspezifische Ausdrucke der diesen Kunden betreffenden Alarmmeldungen sofort oder priodisch veranlaßt werden können. Schließlich besitzt die Entscheidungsstufe 28 noch eine Überwachungsstufe 29, die die Softwaresteuerung beeinflußt und zusätzlich eine Bitfehlermessung durchführt, also die Steuer- und Wähleinheit 1 hinsichtlich der einwandfreien Funktion überwacht und bei auftretenden Fehlern an dieser Einheit entsprechende Alarme oder Warnungen auslöst.

## Patentansprüche

1. Fernüberwachungssystem mit jeder einzelnen von mehreren Überwachungsstellen zur Erzeugung von dem Momentanzustand entsprechenden oder Zustandsänderungen kennzeichnenden Signalen zugeordneten Signalgebern (5 - 7) und durch Übertragungsleitungen (2, 3, 4, 10, 11) mit diesen Signalgebern (5 - 7) verbindbaren Empfängern, dadurch gekennzeichnet, daß die Signalgeber (5 - 7) über direkte Leitungen (2 - 4) an eine zentrale Steuer- und Wähleinheit (1) angeschlossen sind, die ihrerseits über ein Fernübertragungsnetz (11), z. B. ein Telefonnetz mit den Empfängern (12 - 15) verbindbar ist, und daß jeder Empfänger (12 - 15) zusätzlich mit einer individuellen Kennzeichnungseinheit ausgestattet ist, die über eine Erkennungsstufe der Steuer- und Wähleinheit die Anschlußberechtigung jedes Empfängers an das System und seine Zugriffsberechtigung zu vorgebbaren Signalgebern bestimmt.

2. Fernüberwachungssystem nach Anspruch 1, dadurch gekennzeichnet, daß wenigstens ein Teil der Überwachungsstellen zusätzliche, von einem berechtigten Empfänger (12, 13) über die Übertragungseinrichtungen (2 - 4, 10, 11) aktivierbare Signalgeber zur Abgabe von Steuersignalen zur Beeinflussung externer Steuereinheiten aufweist.

3. Fernüberwachungssystem nach Anspruch 1 oder 2, dadurch gekennzeichnet, daß die Steuer- und Wähleinheit (1) eine über äußere Eingänge programmierbare Qualifikationsstufe (9, 28) für von den angeschlossenen Signalgebern (5 - 7) erzeugte Alarmsignale umfaßt, über die für jeden Signalgeber Programme für die Signalverarbeitung wählbar sind, z. B. vorausbestimmbar ist, ob ein Alarmsignal direkt an einen oder mehrere berechtigte Empfänger (12 - 15) weitergeleitet oder erst dann ein Alarmsignal an dem bzw. den Empfängern ausgelöst wird, wenn sich das Alarmsignal wiederholt oder für eine vorwählbare Zeitspanne ansteht.

4. Fernüberwachungssystem nach einem der Ansprüche 1 bis 3, dadurch gekennzeichnet, daß die Eingänge (20 - 26) für die direkten, zu Signalgebern (5 - 7) führenden Leitungen (2 - 4) auf Steckkarten (19, 27) in Zuordnung zu mit den zugehörigen Empfängern (12 - 15) über das Fernübertragungsnetz verbindbaren Ausgängen (16 - 18) zusammengefaßt sind und in der zentralen Steuer- und Wähleinheit (1) die Rufnummern der Empfänger in Zuordnung zu diesen Ausgängen gespeichert sind.

5. Fernüberwachungssystem nach einem der Ansprüche 1 bis 4, dadurch gekennzeichnet, daß die individuellen Kennzeichnungseinheiten der Empfänger (12 - 15) die Kennzeichnungsdaten für den jeweiligen Empfänger auf Steckkarten enthalten.

6. Fernüberwachungssystem nach einem der Ansprüche 1 bis 5, dadurch gekennzeichnet, daß in der zentralen Steuer- und Wähleinheit (1) Speicher zur geordneten Aufzeichnung aller Alarme bzw. hergestellten Verbindungen vorgesehen sind.

7. Fernüberwachungssystem nach einem der Ansprüche 1 bis 6, dadurch gekennzeichnet, daß die zentrale Steuer- und Wähleinheit (1) mit einem Signalumsetzer (Modem) zur Umwandlung analoger Meßsignale in digitale Übertragungssignale ausgestattet ist.
